Europäisches Patentamt

European Patent Office

Office européen des brevets

(19)

(11) Publication number: **0 050 137 B1**

# EUROPEAN PATENT SPECIFICATION

(45) Date of publication of patent specification: **13.02.85**

(51) Int. Cl.⁴: **B 24 B 21/02,** B 24 B 1/00

(21) Application number: **81901105.7**

(22) Date of filing: **13.04.81**

(86) International application number:
**PCT/US81/00476**

(87) International publication number:
**WO 81/02863 15.10.81 Gazette 81/24**

(54) **METHOD AND MEANS OF SHARPENING AN IMPROVED DISC TYPE CYLINDER FOR A CYLINDER MOWER.**

(30) Priority: **14.04.80 US 140254**

(43) Date of publication of application:
**28.04.82 Bulletin 82/17**

(45) Publication of the grant of the patent:
**13.02.85 Bulletin 85/07**

(84) Designated Contracting States:
**AT CH DE FR GB LI LU NL SE**

(56) References cited:
**DE-A-1 577 529**
**FR-A-2 246 219**
**US-A-2 376 847**
**US-A-2 763 101**
**US-A-3 020 682**
**US-A-3 668 814**

(73) Proprietor: **PIKE, Carl A.**
**13600 S. Prairie Avenue**
**Hawthorne, CA 90250 (US)**

(72) Inventor: **PIKE, Carl A.**
**13600 S. Prairie Avenue**
**Hawthorne, CA 90250 (US)**

(74) Representative: **Jones, Colin et al**
**W.P. THOMPSON & CO. Coopers Building**
**Church Street**
**Liverpool L1 3AB (GB)**

Courier Press, Leamington Spa, England.

EP 0 050 137 B1

## Description

This invention relates to mowing machines, and, more specifically, relates to a device and a method of sharpening a mowing machine cylinder.

In the conventional "cylinder" type of lawn mower, a bed knife, which is simply an elongate knife with a straight cutting edge, is traditionally provided. Sometimes the bed knife has notched edges or teeth formed on the edge. The cylinder or "reel" is a cylindrical knife construction. Most mower cylinders are made up of a plurality of serpentine-shaped elongate knives which, together, define a notional cylindrical surface. When the cylinder rotates, the cylindrical surface of the knife construction moves adjacent the bed knife and presents a cutting configuration to the grass, weeds, and the like as the mower moves across the lawn or the field.

Another form of cylinder mower which has been proposed in US—A—2772533, utilizes elliptical discs which lie generally parallel to each other but at an acute angle relative to the shaft of the cylinder or reel and, of course, relative to the axis of the notional cylinder formed by the peripheral edges of the elliptical discs. As the cylinder or reel is rotated, the peripheral edges of the elliptical discs are presented to the bed knife in a relative cutting relationship insofar as the grass is concerned. These cylinders have never gained acceptance. While there are some advantages which would appear to result from this type of cylinder construction, these advantages have not been realized because of difficulties and problems which heretofore have not been solved. It is recognized, for example, that there is somewhat less tendency of the elliptical-disc type cylinder mowers to throw rocks and debris great distances. Somewhat taller grass can be accommodated and there is some savings in power consumption.

Manufacturing problems remained. Sharpening of these cylinders presented an almost impossible situation. Many kinds of grinding machines and other sharpening devices were utilized, but none were successful. The present invention is designed to solve these problems and has overcome the extremely serious problems of the prior art.

The present invention relates to a device and a method for sharpening the cylinders of mowing machines of the general construction which include an elongate bed knife, a generally cylindrical rotary knife construction which, in turn, comprises a plurality of generally elliptical discs mounted on a shaft lying generally in parallel planes to each other but at an acute angle to the shaft axis and means for rotating the knife construction such that the periphery of the discs move in close proximity with the elongate bed knife, thereby presenting a cutting combination to grass and the like between the elongate knife and the respective discs are here considered.

The present invention resides in a device especially constructed and adapted for sharpening cylindrical mower knife constructions made up of a plurality of generally elliptical discs lying generally parallel to each other at an acute angle to the axis of the cylindrical knife construction, comprising:—

a continuous elongate abrading belt having a width at least as great as the length of the knife construction to be sharpened;

means for carrying the belt in a continuous revolving movement to present the abrading surface at one point in the revolutionary path of the belt at a straight line lateral to the abrading surface, such means including a resilient surface behind said belt of said straight line;

means for supporting a cylindrical knife construction for pressing the peripheral surface of said knife construction against the abrading surface at said straight line; and

means for rotating the cylindrical knife construction in contact with the straight line surface of the abrading belt for abrading and sharpening the periphery of the discs which comprise the knife construction.

The invention includes a method of sharpening cylindrical mower knife constructions made up of a plurality of generally elliptical discs lying generally parallel to each other at an acute angle to the axis of the cylindrical knife construction, comprising the steps of:

passing an elongate, continuous abrading belt having a width at least as great as the length of the knife construction to be sharpened in a continuous path of revolution to present the abrading surface at one point in the revolutionary path of the belt at a straight line lateral to the abrading surface;

pressing such mower knife construction against the belt at said straight line, a resilient surface being disposed behind the belt at said straight line; and

rotating said mower knife construction on its own axis relative to the direction of movement of the abrading surface.

Preferably the knife construction is rotated in a direction opposite to the direction of movement of the abrading belt, to thereby maximize the relative movements between the knife periphery and the belt surface.

The present invention will now be illustrated by reference to the accompanying drawings, in which:—

Figure 1 is a perspective view of an elliptical disc type mower, showing in phantom lines the driving wheels at the ends of the shaft of the knife construction;

Figure 2 is a perspective view of a single elliptical disc mounted on the shaft;

Figure 3 is a side view of the cylinder;

Figure 4 is an end view of the cylinder;

Figure 5 is a planar view of a disc used in the manufacture of cylinders as shown in Figures 3 and 4;

Figure 6 is a side view of a disc used in the manufacture of such cylinders;

Figure 7 is a cross-sectional view of a disc taken along the lines 7—7 in the direction of the arrows as shown in Figure 2, showing the hardened surfaces of the disc; and

Figure 8 is a perspective view of a device in accordance with the invention for sharpening and manufacturing the cylinders.

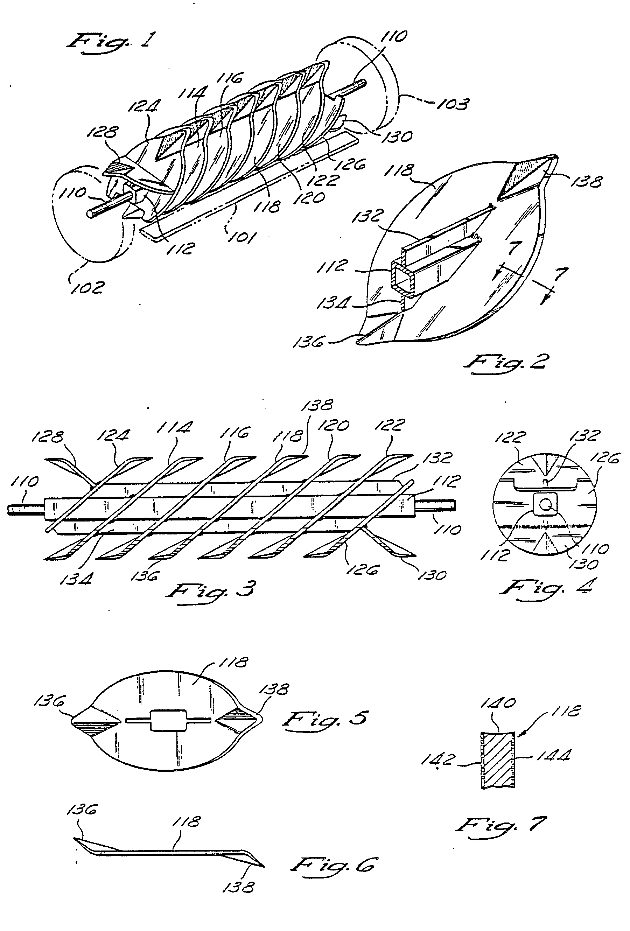

A cylinder type lawn grass and field mowing machine of the type which comprises an elongate bed knife 101 is shown in Figure 1 in phantom lines. One or more driving wheels 102 and 103 are also shown in Figure 1 in phantom. The driving wheels may be the support wheels for the mower or may be driven by some power or other means.

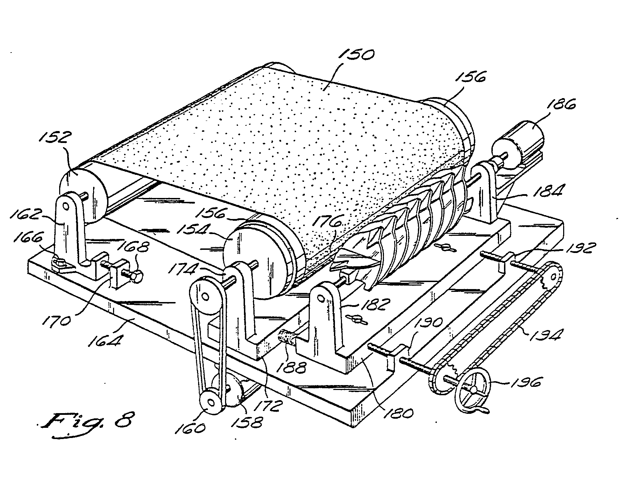

As shown in Figures 1 and 3, the cylinder comprises a shaft 110 which has a square sectioned portion 112, the general configuration of which is best shown in Figure 4. A round portion 110 is used in the conventional way as a journal support and for attachment to whatever driving means it utilized. The cylinder also has a plurality of generally elliptical discs 114 to 122. The cylinder typically includes some partial ellipses, i.e., discs which are only partially in the form of an ellipse, being truncated so as to form the ends of the cylinder. Two end pieces 124 and 126 lie generally parallel to the other elliptical discs 114 to 122 while two short partial elliptical sections 128 and 130 are formed simply to square off the ends of the cylinder formed by the discs. These latter disc segments extend generally perpendicularly to the plane of the disc elements or disc segments, but otherwise work in the same manner.

The cylinder also comprises a pair of support and fan rods 132 and 135 which extend from proximate to the shaft outwardly along the major axes of the elliptical discs.

Figure 2 depicts a single elliptical disc mounted on the shaft with the support and fan elements. Disc 118 out the plurality of discs on the shaft is selected as exemplary to be depicted in Figure 2, and in Figures 5 and 6. In Figure 2 it will be seen that the rectangular aperture which is in the centre of the disc 118, the major axis of the rectangle corresponding to the major axis of the disc, is fitted over the square shaft 112. When so fitted, and allowed to rest at an angle, the plane of the disc resides at an acute angle relative to the axis of the shaft. This angle is about 40 degrees. Variation is permitted and any angle between about 30 degrees and between about 50 degrees can be used. Forty degrees appears to be about optimum, however.

Ears extend, as best shown in Figure 6, in opposite directions relative to the plane of the disc, and, as best shown in Figure 5, at the respective ends of the major axis of the disc. In disc 118, these ears are identified as ears 136 and 138. These ears, formed at the periphery of the disc at the ends of the major axis of the elliptical disc provide an acute angle and rapid relativement movement between the disc periphery and the bed knife as the disc rotates such that the major axis is approaching the bed knife.

Figure 7 depicts the disc 118, in partial cross-section. The disc 118 has a relatively soft centre core portion 140 with hardened surfaces 142 and 144. The discs themselves may be formed of relatively soft steel, although somewhat hardened steel is generally preferred. It is extremely important, however, for maximum efficiency and minimum energy usage plus the savings of cost to resharpening, that the surfaces of the discs, 142, and 144, be case hardened, otherwise surface harened, relative to the central core portion 140 of the disc. The depth of hardening is typically from about 0.13 mm (0.005 inch) to about 0.63 mm (0.025 inch).

In the prior art cylinders, the peripheries of the discs tended to wear round, i.e., the edges of the discs on the surface portions wear before the centre. This resulted in a round knife edge interacting with the bed knife and often either did not cut or simply crushed the grass or other vegetation between the bed knife and the disc. This resulted in a poor quality cut and sometimes damaged the overall appearance of the lawn because of the brown resulting from crushed ends of the grass.

These problems have been overcome by providing a self-sharpening disc. It will be understood, looking at the drawings, that, as the disc periphery rotates adjacent the blade, the centre core portion of the disc will wear more rapidly than the surface portions, by reason of the dirt or other abrasive material which contacts the peripheries of the discs. This will leave hardened edge portions which cut cleanly and provide a self-sharpening effect.

Sharpening of these cylinders to provide a round cylindrical configuration and to provide a very sharp edge has, in the past, presented extremely difficult and nearly insurmountable problems. These problems have been overcome according to the present invention by the device depicted in Figure 8. The device of Figure 8 comprises a continuous elongate abrading belt 150 and means, such as the drums 152 and 154 for carrying or revolving the continuous belt in a revolutionary path and presenting one portion 176 of the lateral surface of the continuous abrading belt at a straight line on the drum 154. An extremely important and critical factor is the inclusion of a resilient surface 156, which may be a thin layer of rubber or other resilient material, on the drum 154. The thickness of this layer will be from about 1.6 mm (one-sixteenth inch) to about 12.7 mm (one-half inch), generally. Any kind of desired drive means, such as the motor 158 and the pulley and belt combination indicated generally at 160 may be used to drive the rollers and cause the abrading belt to revolve in a continuous path presenting a straight line backed by a resilient flat configuration. The drum 152 may be supported in any desired manner. It is desirable to provide some kind of support means, such as the journalled bracket 162 which is movably mounted on the base 164 by bolts 166 which may be loosened or tightened. The bracket 162 may be moved forwardly and backwardly by means of an adjusting bolt 168 which is threadedly received through a threaded aperture in bracket 170. This combination provides means for adjusting the relative tension of the sides of the continuous belt to assure that the belt travels in a continuous path and does not rise from side-to-side in its revolution.

Likewise, any convenient means may be provided for rotationally mounting the drum 154. In the preferred embodiment, a combination bracket and platform 172 which has a journalled upward bracket portion 174 on one end and a comparable structure on the other end for receiving the shaft portions of the drum 154 is provided. This bracket arrangement fixes the position of drum 154 and defines a straight line configuration for the belt with the resilient backing 156, the straight line surface being indicated generally at 176. A movable mount for supporting the cylinder is also provided. In a simplified form, Figure 8 depicts such a bracket as comprising a base 180 with upstanding journal bracket elements 182 and 184 and a drive means 186 for rotatably driving the cylinder once it is mounted on the brackets. The brackets provide journals or other devices for supporting the cylinder for rotation. Rotation is provided by the motor 186. Springs, one of which is shown at 188, or other devices for permitting the controlled adjustment of the bracket 180 forwardly and backwardly, relative to the straight line surface 176 presented by the abrading belt, are provided along with means for moving the bracket back and forth. The means for moving comprises a pair of screws threadedly received in apertures in brackets 190 and 192 which are, in simplified form, shown on the plate 164. A wheel, or other device for turning these screws, which may be interconnected in any manner, a chain and sprocket being generally indicated at 194, is provided. By turning the wheel 196, in this simplified depiction, the bracket 180 is adjustably moved toward and away from the straight line surface 176 provided by the belt with the resilient backing 156.

In carrying out the manufacturing and sharpening process, the belt is caused to revolve in a continuous path to present a rearwardly resiliently cushioned straight line surface, the periphery of the elliptical discs, which are in a cylindrical configuration overall, are presented against this straight line surface 176, resiliently backed surface and, preferably, the cylinder is rotated, generally in a direction such that the relative peripheral movement of the discs and the surface of the abrading belt are maximized. This rotational relationship between the notional cylindrical surface on the mower cylinder and the straight line surface 176 presented by the abrading belt sharpens, with great precision and accuracy, the discs which form the cutting cylinder.

The present specification describes a mowing machine that is claimed in the applicants other application WO 81/02967 which has the same priority date and designates the same States.

## Claims

1. A device especially constructed and adapted for sharpening cylindrical mower knife constructions made up of a plurality of generally elliptical discs lying generally parallel to each other at an acute angle to the axis of the cylindrical knife construction, comprising:
   a continuous elongate abrading belt (150) having a width at least as great as the length of the knife construction to be sharpened;
   means (152—176) for carrying the belt in a continuous revolving movement to present the abrading surface at one point in the revolutionary path of the belt at a straight line (176) lateral to the abrading surface, such means including a resilient surface (156) behind said belt at said straight line (176);
   means (180—184) for supporting a cylindrical knife construction for pressuring the peripheral surface of said knife construction against the abrading surface at said straight line (176); and
   means (186) for rotating the cylindrical knife construction in contact with the straight line surface of the abrading belt for abrading and sharpening the periphery of the discs which comprise the knife construction.

2. A method of sharpening cylindrical mower knife constructions made up of a plurality of generally elliptical discs lying generally parallel to each other at an acute angle to the axis of the cylindrical knife construction, comprising the steps of:
   passing an elongate, continuous abrading belt (150) having a width at least as great as the length of the knife construction to be sharpened in a continuous path of revolution to present the abrading surface at one point in the revolutionary path of the belt at a straight line lateral to the abrading surface;
   pressing such mower knife construction (110—136) against the belt at said straight line, a resilient surface (156) being disposed behind the belt at said straight line (176); and
   rotating said mower knife construction (110—136) on its own axis relative to the direction of movement of the abrading surface.

3. A method according to claim 2, wherein the step of rotating the mower knife construction comprises rotating the mower knife construction such that the periphery of the knife construction moves in a direction opposite the direction of movement of the belt, whereby maximum relative movement between the periphery of the knife construction and the abrading surface results.

## Revendications

1. Dispositif spécialement construit et adapté pour affûter des assemblages de lames de tondeuse cylindriques, composés de plusieurs disques de forme générale elliptique, qui s'étendent à peu près parallèlement entre eux en formant un angle aigu avec l'axe de l'assemblage de lames cylindriques:

une courroie abrasive sans fin (150) de forme allongée, ayant une largeur au moins aussi grande que la longueur de l'assemblage de lames à affûter;

des moyens (152—176) destinés à entraîner la courroie en un mouvement de rotation continu pour présenter la surface abrasive, en un point du trajet de révolution de la courroie selon une ligne droite (176) transversale à la surface abrasive, ces moyens comprenant une surface élastique (156) placée derrière ladite courroie sur ladite ligne droite (176);

des moyens (180 à 184) destinés à supporter un assemblage de lames cylindriques pour presser la surface périphérique dudit assemblage de lames contre la surface abrasive le long de ladite ligne droite (176); et

des moyens (186) destinés à faire tourner l'assemblage de lames cylindriques en contact avec la surface rectiligne de la courroie abrasive pour abraser et affûter la périphérie des disques qui constituent l'assemblage de lames.

2. Procédé d'affûtage d'assemblages de lames de tondeuse cylindriques composés de plusieurs disques de forme générale elliptique qui s'étendent à peu près parallèlement entre eux en formant un angle aigu avec l'axe de l'assemblage de lames cylindriques, comprenant les étapes consistant à:

faire circuler une courroie abrasive sans fin (150) de forme allongée, ayant une largeur au moins aussi grande que la longueur de l'assemblage de lames à affûter selon un trajet de révolution continue, pour présenter la surface abrasive en un point du trajet de révolution de la courroie sur une ligne droite transversale à la surface abrasive; et

presser l'assemblage de lames (110—136) de la tondeuse contre la courroie au niveau de ladite ligne droite, une surface élastique (156) étant disposée derrière la courroie au niveau de ladite ligne droite (176); et

faire tourner ledit assemblage (110—136) de lames de la tondeuse sur son propre axe relativement à la direction du mouvement de la surface abrasive.

3. Procédé selon la revendication 2, dans lequel l'étapes consistant à faire tourner l'assemblage de lames consiste à faire tourner l'assemblage de lames de la tondeuse de telle manière que la périphérie de l'assemblage de lames se déplace dans un sens opposé au sens du mouvement de la courroie, pour porter ainsi au maximum le mouvement relatif entre la périphérie de l'assemblage de lames et la surface abrasive.

Patentansprüche

1. Vorrichtung speziell konstruiert und angepaßt zum Schärfen von zylindrischen Mähmesserkonstruktionen, die aus einer Vielzahl von im allgemeinen elliptischen Scheiben aufgebaut sind, die allgemein parallel zueinander unter einem spitzen Winkel zu der Achse der zylindrischen Messerkonstruktion liegen, gekennzeichnet durch

— ein kontinuierliches längliches Schleifband (150), das eine Breite hat, die wenigstens so groß ist wie die Länge der zu schärfenden Messerkonstruktion;

— Einrichtungen (152 bis 176) zum Tragen des Bandes in einer kontinuierlich umlaufenden Bewegung, um die Schleifoberfläche an einem Punkt in der Umlaufbahn des Bandes an einer geraden Linie (176) seitlich der Schleifoberfläche darzubieten, wobei diese Einrichtungen eine nachgiebige Oberfläche (156) hinter dem Band an der geraden Linie (176) aufweisen;

— Einrichtungen (180 bis 184) zum Abstützen einer zylindrischen Messerkonstruktion zum Andrücken der Umfangsoberfläche der Messerkonstruktion gegen die Schleiffläche an der geraden Linie (176); und

— eine Einrichtung (186) zum Rotieren der zylindrischen Messerkonstruktion in Berührung mit der geradlinigen Oberfläche des Schleifbandes zum Schleifen und Schärfen des Umfangs der Scheiben, die die Messerkonstruktion bilden.

2. Verfahren zum Schärfen zylindrischer Mähmesserkonstruktionen, die aus einer Vielzahl von allgemein elliptischen Scheiben aufgebaut sind, die allgemein parallel zueinander unter einem spitzen Winkel zu der Achse der zylindrischen Messerkonstruktion liegen, gekennzeichnet durch die Schritte

— Führen eines länglichen, kontinuierlichen Schleifbandes (150), das eine Breite hat, die wenigstens so groß ist wie die Länge der zu schärfenden Messerkonstruktion, in einer kontinuierlichen Umlaufbahn, um die Schleifoberfläche an einem Punkt in der Umlaufbahn des Bandes an einer geraden Linie seitlich der Schleiffläche darzubieten;

— Anpressen der Mähmesserkonstruktion (110 bis 136) gegen das Band an der geraden Linie, wobei eine nachgiebige Oberfläche (156) hinter dem Band an der geraden Linie (176) angeordnet ist; und

— Rotieren der Mähmesserkonstruktion (110 bis 136) um ihre eigene Achse relativ zu der Bewegungsrichtung der Schleiffläche.

3. Verfahren nach Anspruch 2, dadurch gekennzeichnet, daß der Schritt des Rotierens der Mähmesserkonstruktion ein Rotieren der Mähmesserkonstruktion derart aufweist, daß der Umfang der Messerkonstruktion sich in einer Richtung entgegengesetzt zu der Bewegungsrichtung des Bandes bewegt, wodurch sich eine maximale Relativbewegung zwischen dem Umfang der Messerkonstruktion und der Schleiffläche ergibt.

*Fig. 1*

*Fig. 2*

*Fig. 3*

*Fig. 4*

*Fig. 5*

*Fig. 6*

*Fig. 7*

Fig. 8